# EUROPÄISCHE PATENTSCHRIFT

(11) **EP 3 312 481 B1**
(45) Veröffentlichungstag und Bekanntmachung des Hinweises auf die Patenterteilung: **04.12.2019**
(21) Anmeldenummer: 17197022.1
(22) Anmeldetag: 18.10.2017
(51) Int. Cl.: F16J 15/06, G01N 21/64

(54) **VERFAHREN ZUR EINDEUTIGEN UND UNVERLIERBAREN KENNZEICHNUNG UND IDENTIFIZIERUNG EINES WEICHSTOFFDICHTUNGSMATERIALS**
METHOD FOR UNIQUE AND CAPTIVE MARKING AND IDENTIFYING OF A SOFT SEAL MATERIAL
PROCÉDÉ D'IDENTIFICATION ET D'ÉTIQUETAGE IMPERDABLE ET UNIVOQUE ET IDENTIFICATION D'UN MATÉRIAU TENDRE DE JOINT

(30) Priorität: 18.10.2016 EP 16194400
(43) Veröffentlichungstag der Anmeldung: 25.04.2018
(73) Patentinhaber: Frenzelit GmbH, 95460 Bad Berneck (DE)
(72) Erfinder: Will, Andreas, 95686 Fichtelberg (DE); Steinert, Theresa, 95195 Röslau (DE); Übelmesser, Peter, 95445 Bayreuth (DE)
(74) Vertreter: Becker Kurig Straus

(56) Entgegenhaltungen:
- CA-A1- 2 975 788
- US-A1- 2003 166 297
- US-A1- 2013 327 671
- US-A1- 2015 160 136

## Beschreibung

### Technisches Gebiet

Die vorliegende Erfindung betrifft ein Verfahren zur eindeutigen Kennzeichnung und Identifizierung eines Weichstoffdichtungsmaterials bzw. einer daraus hergestellten Dichtung. Die Erfindung betrifft insbesondere ein Verfahren zur Herstellung eines Weichstoffdichtungsmaterials bzw. einer daraus hergestellten Dichtung durch gezieltes Mischen der dichtungsfunktionellen Rohstoffkomponenten, die bekannte oder zuvor identifizierte Fingerprints aufweisen (die Fingerprints stellen eine Art virtuellen Barcode dar). Die Rohstoffe bzw. Rohstoffkomponenten werden anschließend gezielt so gemischt, so dass dem Produkt zum einen ein eindeutiges Spektralsignal zugeordnet ist und zum anderen die Dichtungsfunktion durch korrekte Rezeptur und Vermeidung der Zugabe von externen Indikatoren oder Tracern gewährleistet wird. Die eindeutige Identifizierung kann vor, während und nach dem bestimmungsgemäßen Einsatz eines Dichtungsmaterials für Weichstoffflachdichtungen bzw. einer daraus hergestellten, fertigen Dichtung vorgenommen werden, wobei die eindeutige Identifizierung des Dichtungsmaterials unabhängig von Form und Größe der Weichstoffdichtung erfolgen kann.

### Stand der Technik

Jedes Dichtungsmaterial aus dem Bereich der statischen Dichtungen/Flachdichtungen (in Form von Rollen- bzw. Plattenmaterial) wird bei der Fertigung mit einer Chargennummer (Rollen- bzw. Plattennummer) versehen. Die Plattennummer ist ausschlaggebend für die Produktidentifizierung. Nur anhand dieser Kennzeichnung können Prozess- und Fertigungsparameter zugeordnet werden. Die Kennzeichnung ist üblicherweise eine partielle optische Signatur am Rand einer Platte in Form eines Aufklebers, Stempels, oder Wasserzeichens.

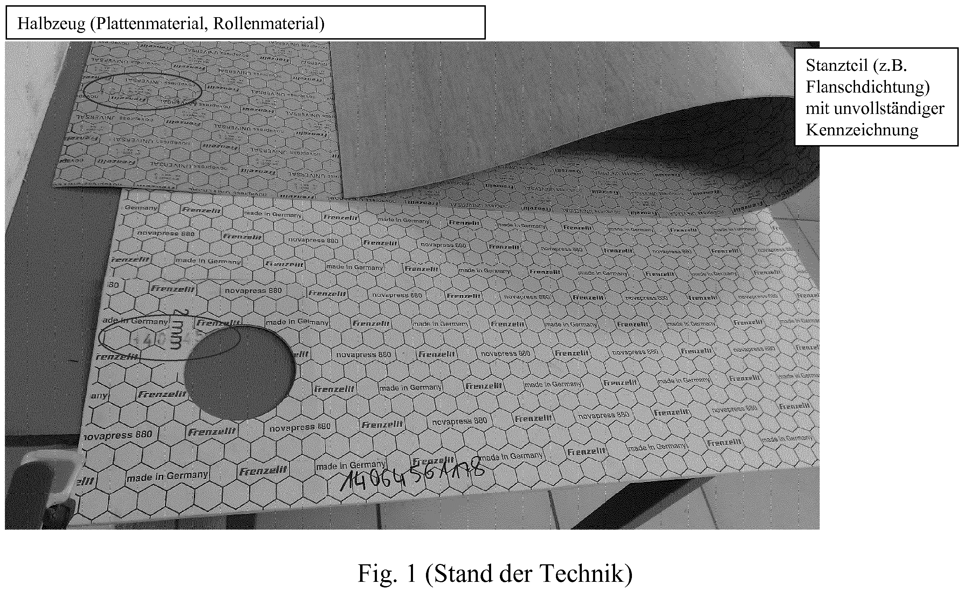

Diese Kennzeichnung ist jedoch nicht unverlierbar, d.h. nicht permanent und nicht homogen in das Material integriert und damit im fertigen Produkt nicht ohne weiteres erkennbar. Trotz Kennzeichnung jeder Dichtungsplatte bzw. -rolle sind etwaige Identifizierungen wie Produktname, Chargennummer etc. oft bereits nach dem ersten Stanz- oder Schneidvorgang auf dem Stanzteil nicht mehr zuordenbar bzw. die Kennzeichnung ist verloren, wodurch eine Rückverfolgung des Produkts anhand der fertigen Dichtung nicht mehr möglich ist (siehe Fig. 1). Mit dem Verlust der Kennzeichnung (Rollen- bzw. Plattennummer) erfolgt gleichzeitig ein Abriss der Informationskette. Als Folge kann bei der Überprüfung der fertigen, möglicherweise bereits eingebauten Dichtung, nicht mehr nachvollzogen werden, ob die Dichtung den vorliegenden Anforderungen (Temperatur, Druck, pH-Wert, chemische Widerstandsfähigkeit etc.) genügt.

Es besteht daher ein Bedarf nach einer Möglichkeit, um eine gestanzte Dichtung (z.B. Flanschdichtung) unabhängig von Form und Zustand (Alter, Form, Vollständigkeit etc.) eindeutig bestimmten Parametern des ursprünglichen Dichtungsmaterials (Halbzeug, z.B. Platten- oder Rollenmaterial) zuordnen zu können.

Die DE 10 2009 016 429 A1 schlägt hierzu vor eine Flachdichtung, z.B. eine Flanschdichtung mit einer optisch lesbaren Kennzeichnung, z.B. einem Barcode, zu versehen. Diese Kennzeichnung wird unmittelbar auf dem Material der Flachdichtung erzeugt. Die Kennzeichnung ist mit einem optischen Gerät auslesbar.

Die EP 2 069 580 B1 schlägt vor Dichtungswerkstoffe mit einer topographischen Kennzeichnung zu versehen, die fest in das Dichtungselement eingebracht ist. Die Kennzeichnung wird durch Laserbearbeitung auf das Dichtelement aufgebracht.

US 2003/166297 A1 offenbart eine Produktidentifizierung anhand von dem Produkt zugesetzten, speziell entworfenen Nanopartikeln, die per Raman-Spektroskopie detektiert werden können.

US 2013/327671 A1 offenbart die Identifizierung von Kunststoffverpackungen mittels Zugabe von rezepturfremden Stoffe in das Verpackungsmaterial sowie ein daran angeschlossenes Datenverarbeitungsverfahren.

US 2015/160136 A1 offenbart ein Verfahren, bei dem wellenlängenselektive Partikel wie SERS-Nanotags, bzw. deren Wellenlängenselektivität genutzt wird, um Materialien zu markieren und zu identifizieren.

CA 2 975 788 A1 offenbart ein Verfahren zum Identifizieren einer Probe aus einem Kunststoffmaterial und / oder den darin enthaltenen Additiven, wobei mindestens ein Teil des Kunststoffmaterials mit Licht von mindestens einer Wellenlänge, z.B. durch eine gepulste Lichtquelle erfasst und analysiert wird.

### Kurze Beschreibung der Erfindung

Die bekannten Lösungen erlauben jedoch nur eine begrenzte Zuordnung bzw. Identifizierung der fertigen Dichtung, da sämtliche Kodierungen durch Einsatzbedingungen (z.B. Säureangriff, Temperatur) beeinflusst, verändert und/oder zerstört werden können. Zudem sind genannte Identifizierungen nur auf sehr begrenzten Bereichen der Dichtung vorgesehen. Wird z.B. nach einem Zwischenfall nur noch ein kleiner Abschnitt einer Dichtung gefunden, ist es wahrscheinlich, dass dieser keine entsprechende Kennzeichnung aufweist.

Die Identifizierung mittels Zugabe externer, also rezepturfremder Stoffe und die Detektion dieser Indikatoren oder Tracer bietet ebenfalls eine unverlierbare Produktidentifizierung. Gängige Beispiele für solche Indikatoren sind üblicherweise Stoffe, die besonders leicht durch Licht, UV-Strahlung oder sonstige elektromagnetische Strahlung anregbar sind. Diese Indikatoren werden dann beispielsweise durch Fluoreszenz-Spektroskopie-Verfahren nachgewiesen.

Jedoch hat die Zugabe zusätzlicher Stoffe bei Produkten, die sehr strikte Anforderungen erfüllen müssen, wie beispielsweise Dichtungen in einem Hochdruck-, Hoch/Tiefsttemperatur- oder durch Säure/Basen beanspruchten Bereichen, erhebliche Nachteile. Neben erhöhten Herstellungskosten können Produkteigenschaften, wie chemische Resistenz ("Auswaschen"), thermische Stabilität und Druckfestigkeit, durch solche beigefügten Stoffe negativ beeinflusst werden, was die Übertragbarkeit bekannter Indikatorstoffe auf den Bereich der Weichstoffdichtungen erheblich einschränkt.

Die vorliegende Erfindung wird durch das Verfahren gemäß Anspruch 1 bereitgestellt. Die folgende Offenbarung von Ausführungsformen dient einem erleichterten Verständnis der Erfindung.

In einer Ausführungsform der vorliegenden Offenbarung wird ein Verfahren bereitgestellt zur eindeutigen und unverlierbaren Kennzeichnung und Identifizierung eines Weichdichtungsmaterials oder Weichdichtungshalbzeugs, sowie einer daraus hergestellten Dichtung, auf Basis einer Produktrezeptur und Daten einer Charakterisierung von Rohstoffkomponenten der Produktrezeptur, die aus Mengenangaben mehrerer dichtungsfunktioneller Rohstoffkomponenten besteht, aber ohne Zugabe eines rezepturfremden Indikators oder Tracers, wobei die Produktrezeptur für jede der Rohstoffkomponenten eine gewisse Mengentoleranz aufweist, innerhalb derer das Produkt seine gewünschte Dichtungseigenschaften aufweist. Das erfindungsgemäße Verfahren umfasst dabei die folgenden Schritte:
(a) qualitative und quantitative Charakterisierung der Rohstoffkomponenten und Zuordnung der durch die Charakterisierung gewonnenen Daten zu den einzelnen Rohstoffkomponenten;
(b) qualitative und quantitative Auswahl und Kombination der Rohstoffkomponenten gemäß der Produktrezeptur, wobei durch Variation der Mengenangaben mindestens einer Rohstoffkomponente der Produktrezeptur, eine Produktsignalrezeptur mit einem eindeutigen Spektralsignal bzw. Fingerprint des Produkts anhand der zugeordneten Daten der Charakterisierung der Rohstoffkomponenten ermittelt wird, wobei
   die Eindeutigkeit des Spektralsignals durch Abgleich mit einer Datenbank von Spektralsignalen bereits existierender Produkte und durch Variation der Mengenangabe der mindestens einen Rohstoffkomponente der Produktrezeptur innerhalb der Mengentoleranzen der mindestens einen Rohstoffkomponente gewährleistet wird; und
(c) Herstellen des Produkts mit dem eindeutigen Spektralsignal aus den Rohstoffkomponenten gemäß der Produktsignalrezeptur, wobei
   die Rohstoffkomponenten mindestens eine Komponente umfassen, ausgewählt aus der Gruppe, bestehend aus Elastomeren, Quarz, Glimmer, Kieselerden, Kaoline, Kieselsäure, Bariumsulfat, Wollastonit, Baryt, Diatomene, Talkum, Bornitrid, Metalloxide, Graphit, Alkalisalze, Erdalkalisalze, organischen Fasern und anorganischen Fasern.

In einer Ausführungsform des Verfahrens der vorliegenden Offenbarung umfasst die mindestens eine Rohstoffkomponente der Produktrezeptur drei unterschiedliche Rohstoffkomponenten, bevorzugt vier unterschiedliche Rohstoffkomponenten, besonders bevorzugt mindestens fünf unterschiedliche Rohstoffkomponenten. Es ist möglich, dass ein bestimmtes detektierbares Spektralsignal (hier auch Peak bzw. Peak-Position und Peak-Höhe genannt) durch nur eine der Rohstoffkomponenten bereitgestellt werden kann, etwa wenn ein bestimmtes Element nur in einer Rohstoffkomponente vorkommt. In diesem Fall kann es ausreichend sein, nur diese Komponente zu variieren, um im Endprodukt (Weichstoffdichtung) ein eindeutiges Signal zu erhalten, welches der Dichtung eindeutig zuordenbar ist. Es sollte jedoch verstanden werden, dass üblicherweise zur Erzeugung des Signals mehrere Rohstoffkomponenten speziell ausgewählt und kombiniert werden müssen (Einstellung der Produktsignalrezeptur), um ein ausreichend eindeutiges Spektralsignal zu gewährleisten.

In einer weiteren Ausführungsform kommt die mindestens eine Rohstoffkomponente in einer Menge von mindestens 3 Gewichtsprozent, bevorzugt mindestens 5 Gewichtsprozent, besonders bevorzugt mindestens 8 Gewichtsprozent, bezogen auf die Gesamtzusammensetzung der Produktrezeptur vor.

In einer Ausführungsform des Verfahrens der vorliegenden Offenbarung sind die Rohstoffkomponenten der Produktrezeptur ausgewählt aus der Gruppe, bestehend aus Elastomeren, Quarz, Glimmer, Kieselerden, Kaoline, Kieselsäure, Bariumsulfat, Wollastonit, Baryt, Diatomene, Talkum, Bornitrid, Metalloxide, Graphit, Alkalisalze, Erdalkalisalze, organischen Fasern und anorganischen Fasern.

In einer Ausführungsform des Verfahrens der vorliegenden Offenbarung umfasst die Charakterisierung der Rohstoffkomponenten eine chemische Analyse der Rohstoffkomponenten oder Erhalten der Zusammensetzung der Rohstoffkomponenten von einer Datenbank bzw. einem Datenträger. Letzteres bedeutet, dass in einigen Ausführungsformen der vorliegenden Offenbarung die Charakteristika der Rohstoffkomponenten bereits bekannt sein können, so dass der Analyseschritt ausgelassen werden kann. Der Analyseschritt ist demnach als optional zu verstehen und die entsprechenden Daten können auch vom Hersteller oder Lieferanten in Erfahrung gebracht werden.

In einer Ausführungsform umfasst das Verfahren der vorliegenden Offenbarung ein eindeutiges Verknüpfen des Spektralsignals des Produkts mit einem Kennzeichnungseintrag in einer Datenbank.

In einer Ausführungsform des Verfahrens der vorliegenden Offenbarung umfasst das Charakterisieren der Rohstoffkomponenten ein Analysieren der Rohstoffkomponenten hinsichtlich der enthaltenen Mengen von mindestens zwei unterschiedlichen chemischen Elementen, wobei die Stärke von Spektralpeaks jeweils bei einer Wellenlänge, die einem der mindestens zwei chemischen Elemente entspricht, als Codierungssignal zur eindeutigen Identifizierung des Produkts in einer Datenbank hinterlegt wird.

In einer Ausführungsform der vorliegenden Offenbarung erfolgt das oben beschriebene Analysieren der Rohstoffkomponenten durch ein Analyseverfahren. Dieses Analyseverfahren kann jedwedes geeignete herkömmliche Analyseverfahren umfassen, z.B. eine nasschemische Analyse. Bevorzugt umfasst die Analyse ein spektroskopisches Verfahren. Besonders bevorzugt ist das spektroskopische Verfahren ausgewählt aus einer Gruppe, bestehend aus thermogravimetrischer Analyse, Massenspektroskopie, Atom- oder Molekülabsorptionsspektroskopie, Atom- oder Molekülemissionsspektroskopie, Atom- oder Molekülfluoreszenzspektroskopie, Streuungsspektroskopie, Kernresonanzspektroskopie, Spinresonanzspektroskopie, Festkörperspektroskopie, Impedanzspektroskopie und Laserspektroskopie.

In einer Ausführungsform der vorliegenden Offenbarung umfasst der Datenbankeintrag wenigstens Informationen in einer Kategorie, ausgewählt aus einer Gruppe, bestehend aus Herstellungsdatum, Zusammensetzung des Dichtungsmaterials, Produktnummer, Chargennummer, Hersteller, Herstellungsort, Herkunft wenigstens einer der Zutaten, Verwendungszweck und einen Handbucheintrag zu dem Weichstoffdichtungsmaterial. Die Art der Informationen ist jedoch hier nur beispielhaft beschrieben und zur Durchführung des Verfahrens nebensächlich. Sie sollte daher nicht als Einschränkung der Erfindung aufgefasst werden.

Üblicherweise stehen diese Informationen nur über den Datenbankeintrag zur Verfügung, der über das kennzeichnende Spektralsignal (also dem Spektrum der Rohstoffe, d.h. üblicherweise Position und Höhe bestimmter Peaks des Spektrums) in dem Weichstoffdichtungsmaterial zuordnungsbar ist. Allerdings können in einigen bevorzugten Ausführungsformen auch einfache Informationen direkt in dem Indikatorsignal verschlüsselt sein. Es ist zum Beispiel möglich zwei oder mehr Peaks zur direkten Angabe einer Produktnummer oder Produkt-ID zu nutzen.

In einer Ausführungsform des Verfahrens der vorliegenden Offenbarung ist mehreren Peaks (d.h. Position und besonders bevorzugt Position und Höhe des Peaks bei einer bestimmten Energie/Wellenlänge) des Spektralsignals jeweils eine bestimmte Kennzeichnungseintragskategorie zugeordnet, so dass die Höhe eines dieser Peaks eine bestimmte Einheit in dieser Kennzeichnungseintragskategorie zugeordnet werden kann, um zum Beispiel, ohne die Notwendigkeit ständiger Aktualisierung der Datenbank, mittels sechs unterschiedlicher Signalpeaks jedem Produktionsslot ein Datum zuzuordnen.

In einer Ausführungsform des Verfahrens der vorliegenden Offenbarung ist eine Peak-Position und die Peak-Höhe des Peaks des Spektralsignals einer Strichposition und Strichdicke eines Barcodes oder einer Ziffer und Zifferposition in einer Zahlencodefolge zugeordnet und der Barcode bzw. die Zahlencodefolge beispielsweise auf einer Verpackung des Produkts abgebildet. Entsprechende Codes/Zahlenfolgen können auch direkt an abzudichtenden Flächen oder Anlagen vorgesehen sein, um eine schnelle und komfortable Zuordnung einer passenden Weichtoffdichtung direkt vor Ort zu ermöglichen.

In einer Ausführungsform der vorliegenden Offenbarung umfassen die wenigstens zwei unterschiedlichen chemischen Elementen wenigstens ein Element, das ausgewählt ist aus einer Gruppe, bestehend aus Si, K, Al, Mg, Fe, Li, V, Cr, B, Zn, Mn, Na, Cs, Ca, Ba, Ti, Rb, C, Fr, Be, Sr und Ra. Diese Elemente sind in der vorliegenden Ausführungsform für den Schritt der Charakterisierung (bei der Wareneingangskontrolle) besonders relevant, da diese Elemente bei der späteren Detektion am fertigen Produkt (z.B. mit einem Handgerät) eine bevorzugte Auswahl bilden.

In einer Ausführungsform des Verfahrens der vorliegenden Offenbarung umfasst die Charakterisierung der Rohstoffkomponenten eine Analyse zur Bestimmung der enthaltenen Mengen wenigstens eines Stoffes, ausgewählt aus einer Gruppe, bestehend aus binärem, ternärem oder quaternärem Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat und Oxygermanat.

In einer Ausführungsform des Verfahrens der vorliegenden Offenbarung sind dem Weichstoffdichtungsmaterial bzw. der fertigen Weichstoffdichtung (d.h. dem "Produkt") die Eigenschaften der Rückverfolgbarkeit und Identifikationsfähigkeit inhärent und unverlierbar beigefügt, wobei diese Eigenschaften temperaturstabil, medienstabil, unverlierbar und geometrieunabhängig mit dem Weichstoffdichtungsmaterial verbunden sind und die dichtungstechnischen Kennwerte und Parameter nicht negativ beeinträchtigen. Dadurch wird die Rückverfolgbarkeit entlang der gesamten Wertschöpfungskette des Weichstoffdichtungsmaterials bzw. der daraus hergestellten Dichtungen ermöglicht.

In einer Ausführungsform des Verfahrens der vorliegenden Offenbarung ist weiterhin umfasst (d) ein Scannen des Produkts mit einem Detektionsgerät; und (e) ein Herstellen einer Datenverbindung von dem Detektionsgerät oder einem daran angeschlossenen Anzeigegerät mit einer zentralen Rechnereinrichtung und Auslesen der aus dem spezifischen Materialsignal erhaltenen Daten.

In einer besonders bevorzugten Ausführungsform der vorliegenden Offenbarung nutzt das oben beschriebene Detektionsgerät Raman-Spektroskopie, Röntgenfluoreszenz-Spektroskopie oder Ionen-Mobilitäts-Spektroskopie. In anderen Ausführungsformen sind jedoch auch andere Detektionsmechanismen möglich, wie beispielsweise optische Verfahren.

Im Kern wird durch die Offenbarung ein Herstellungsverfahren einer Weichstoffdichtung bereitgestellt, umfassend die Charakterisierung von Rohstoffkomponenten einer Rezeptur, die aus Mengenangaben dichtungsfunktioneller Rohstoffe (der "Rohstoffkomponenten") besteht. Das heißt, die Produktrezeptur sieht keine (zusätzliche) Zugabe von Indikatoren/Tracer vor. Die Rezeptur weißt bestimmte Mengentoleranzen für die Rohstoffkomponenten auf, innerhalb derer die volle Dichtungsfunktionalität des Produkts gewährleistet ist. Diese Toleranzen liegen je nach einzuwiegender Komponente und Zusammensetzung dieser im Bereich von ± 0,01 Gew.-% bis 10,0 Gew.-%, bevorzugt ± 0,02 Gew.-% bis 8 Gew.-%, ± 0,04 Gew.-% bis 6 Gew.-%, ± 0,06 Gew.-% bis 4 Gew.-%, ± 0,08 Gew.-% bis 2 Gew.-% und besonders bevorzugt im Bereich von ± 0,10 Gew.-% bis 1,0 Gew.-%, bezogen auf die jeweilige Komponente. Diese Toleranzbereiche bieten den Spielraum für die spätere Einstellung des Spektralsignals des Produkts und werden daher auch als "Codierungsbereich" bezeichnet.

Ein praktisches erfindungsgemäßes Beispiel stellt eine Komponente dar, die laut Produktrezeptur in einer Menge von 20 Kg in einem Weichdichtungsmaterial (oder in der Rohmasse, aus der das Weichstoffdichtungshalbzeug gefertigt wird) vorkommt. Eine Funktionstoleranz von 1,0 Gew.-% ergibt daher eine Menge von 20 Kg ± 0,20 Kg. Diese Komponente muss also in einer Menge von 19,80 Kg bis 20,20 Kg in die spätere Produktsignalrezeptur des Weichdichtungsmaterials (oder die Rohmasse) zugeführt werden. Beachtet man zusätzlich die Wiegetoleranzen (in der Praxis beispielsweise ± 0,001 Gew.-%) ergibt sich ein tatsächlich einzuwiegender Bereich von 19,8002 Kg bis 20,1998 Kg.

Durch gezieltes Abwiegen ("Produktsignalrezeptur") innerhalb der Rezepturtoleranzen mindestens einer Komponente (bevorzugt mindestens drei, besonders bevorzugt fünf Komponenten) mit bekannter Charakterisierung wird gezielt ein eindeutiges Spektralsignal (bevorzugt Position und Höhe eines oder mehrerer Elementarpeaks in einem Spektrum) im fertigen Produkt erzeugt. Die Wiegetoleranz sollte dabei bevorzug mindesten 10-fach kleiner, bevorzugt 25-fach kleiner und besonders bevorzugt 50-fach kleiner als die Toleranzen einer Komponente zur Gewährleistung der Produkteigenschaften (siehe oben).

Zur eindeutigen Identifikation des durch das erfindungsgemäße Verfahren hergestellten und zugeordneten bzw. verknüpften Weichstoffdichtungsmaterials bzw. einer Dichtung genügen kleinste Mengen, die für eine geeignete Analyse, bevorzugt eine Spektroskopie, ausreichen. Eine Untersuchung ist somit nur von der noch verfügbaren Masse des Weichstoffdichtungsmaterials und nicht von Form und Vollständigkeit eines bestimmten Abschnitts der Weichstoffdichtung abhängig.

### Kurze Beschreibung der beigefügten Zeichnungen

Fig. 1 zeigt Abbildungen von Halbzeug bzw. Weichstoffdichtungsmaterialplatten mit einer aufgedruckten Kennzeichnung, wie sie im Stand der Technik bekannt sind. Außerdem ist in Fig. 1 ein gestanztes Dichtungsmaterial (z.B. Flanschdichtung) mit einer Kennzeichnung gezeigt, welche aufgrund des Stanzvorgang nur noch unvollständig erkennbar ist.
Fig. 2 zeigt beispielhaft die materialspezifische Charakterisierung der organischen Dichtungsbestandteile eines Weichstoffdichtungsmaterials mittels thermogravimetrischer Analyse.
Fig. 3 zeigt beispielhaft die spezifische Materialzusammensetzung von organischen und anorganischen Bestandteilen A-O eines Produktionslots bzw. einer Produktionscharge in Form einer Rohstoffkomponentenanalyse.
Fig. 4 zeigt die spezifische Materialzusammensetzung der Fig. 3 mit eingezeichneten Mengentoleranzen, so genannten Codierungsbereichen.

### Ausführliche Beschreibung der Ausführungsformen

Die vorliegende Offenbarung stellt eine Technologie bereit, welche es ermöglicht, durch gezielte Kombination von funktionellen Komponenten eine unverlierbare Kennzeichnungen gezielt wie einen chemischen "Barcode" oder "Fingerprint" homogen in das Dichtungsmaterial zu integrieren. Die Kennzeichnung kann mit unterschiedlichsten und nahezu beliebig vielen dichtungsspezifischen Informationen verknüpft werden, die zentral und/oder über das Internet abrufbar sein können.

Bei der Herstellung des Weichstoffdichtungsmaterials wird mit üblichen organischen und anorganischen Komponenten ("Rohstoffkomponenten") gearbeitet. In einer bevorzugten Ausführungsform werden alle verwendeten Komponenten im Rahmen von Wareneingangskontrollen auf definierte Qualitätsstandards geprüft (z.B. Reinheitsgrad, Partikelgrößenverteilung, spezifische Oberfläche, Verunreinigungen etc.). Einige Ausführungsformen der Offenbarung verwenden jedoch bereits bekannte Zusammensetzungen und Inhaltsstoffe der verwendeten Komponenten, so dass eine (erneute) Analyse überflüssig wird.

Diese Daten zu den Komponenten enthalten insbesondere Informationen zu bestimmten Spektralsignalen bzw. Spektren der Komponenten. Genauer gesagt sind insbesondere Peak-Position und bevorzugt auch Peak-Höhe bestimmter Stoffe (Elemente/Verbindungen) von Interesse. Aus diesen Daten der Rohstoffkomponenten wird später bevorzugt durch einen Computer ein Spektralsignal der fertigen Dichtung berechnet, indem die Rezepturmischung simuliert wird. Im einfachsten Fall werden die (interessanten, d.h. später am fertigen Produkt auch detektierbaren) Peaks der einzelnen Rezepturbestandteile, geteilt durch den Anteil am Gesamtgewicht der jeweiligen Rezepturkomponente, in ein gemeinsames Spektrum addiert.

Im Grunde kann für die spätere Detektion am Produkt jede eindeutig in einer Analyse feststellbare Verbindung bzw. ein eindeutig feststellbares Element als Peak-Position für die Codierung von Informationen dienen. Besonders bevorzugte Stoffe in den Komponenten, bzw. deren Spektralpeaks können elementares Si, K, Al, Mg, Fe, Li, V, Cr, B, Zn, Mn, Na, Cs, Ca, Ba, Ti, Rb, N, C, Fr, Be, Sr sein. Chemische Elemente sind aufgrund ihrer Stabilität zur Detektion bevorzugt, jedoch ist die Erfindung nicht darauf beschränkt und/oder Ra sowie ein binäres, ternäres oder quaternäres Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat oder Oxygermanat dieser Elemente können ebenfalls detektiert werden.

Ausreichend stabile Verbindungen aus diesen Stoffen können unter Umständen ebenfalls geeignete Peaks in einem Spektrum erzeugen. Ganz besonders bevorzugte Elemente bzw. Peaks werden durch elementares Fe, V, Br, Bi Mn, Cs, Ca, Ba, Ti, Fr, Sr, Rb, Zr, Nb, Y, La, Ta, W, V, Co und/oder Ra bereitgestellt. Zusätzlich sind binäres, ternäres oder quaternäres Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat oder Oxygermanat dieser Elemente bevorzugt.

Diese Daten zu den Komponenten (insbesondere der Peaks der entsprechenden Spektren) können in einer Wareneingangs-Datenbank hinterlegt werden, welche z.B. einen Teil des Prozessleitsystems darstellt. Die Charakterisierung der Rohstoffkomponenten bzw. die entsprechenden Daten können dazu genutzt werden, dass durch den kontrollierten Einsatz und gezielter Kombination mit jedem Produktionslot eine unikale Kennzeichnung, also der oben erwähnte "Barcode" oder "Fingerprint" erzeugt werden kann. Um eine spätere eindeutige Identifikation zu ermöglichen, sollte auch jede Kennzeichnung nur einmalig für eine Charge verwendet werden.

Diese Kennzeichnung wird im Folgenden als eine Art "virtueller Barcode" verwendet. Diese Information ist vollflächig und homogen in das Material integriert und somit unverlierbar und geometrieunabhängig in dem Weichstoffdichtungsmaterial (z.B. Flanschdichtung) und der daraus hergestellten Weichstoffdichtung verknüpft und eindeutig zuordnungsbar.

Es sollte beachtet werden, dass natürliche Schwankungen in den Rohstoffkomponenten ebenfalls eine wichtige Rolle spielen. So sind beispielsweise die chemischen Charakteristika von Glimmern aus unterschiedlichen Abbaugebieten teilweise sehr unterschiedlich. Solche natürlichen Schwankungen können in einer Ausführungsform der Offenbarung auch ausgenutzt werden, um das Spektralsignal des Produkts auch außerhalb der Toleranzmengen einzustellen.

In einer beispielhaften, bevorzugten Ausführungsform der vorliegenden Offenbarung erfolgen zunächst die Charakterisierung der Rohstoffkomponenten und die Zuordnung der (detektierbaren) Peaks in deren Spektren. Daran anschließend erfolgt die gezielte Auswahl und Kombination der Komponenten auf Basis dieser ermittelten Fingerprint-Charakterisierung, um eine eindeutige Kennzeichnung in dem zu erzeugenden Weichstoffdichtungsmaterial zu gewährleisten.

Nun kann die Herstellung von Dichtungshalbzeugen (Rollen- bzw. Plattenmaterial) im Rahmen von Produktionslots oder -Chargen erfolgen. In einer Ausführungsform kann zusätzlich eine Ermittlung der spezifischen Materialsignale für jeden Produktionslot durchgeführt werden, z.B. um die zuvor bestimmte, gezielte Auswahl bezüglich des Spektralsignals in dem fertigen Weichstoffmaterial zu überprüfen.

Im Rahmen des oben beschriebenen Auswahl- und Herstellungsprozesses wird die Kennzeichnung, also das spezifische Material- bzw. Spektralsignals des betreffenden Produktionslots erstellt und in einer Datenbank mit dichtungsspezifischen Informationen verknüpft (z.B. Produktionslot / Herstellzeitraum / Produktname / Einbauhinweise etc.). Der hergestellte Weichstoffdichtungswerkstoff ist somit eindeutig mit dem kennzeichnenden Datenbankeintrag verknüpft und alle aus dem Weichstoffdichtungswerkstoff hergestellten Dichtungen können nachfolgend ebenfalls eindeutig einem kennzeichnenden Datenbankeintrag zugeordnet werden.

Die Ermittlung der Kennzeichnung, also des spezifisches Material- bzw. Spektralsignals (später detektierbare Peaks und bevorzugt deren Höhe) des betreffenden Produktionslots, wird durch Spektroskopie der organischen und/oder anorganischen Bestandteile des Dichtungsmaterials realisiert.

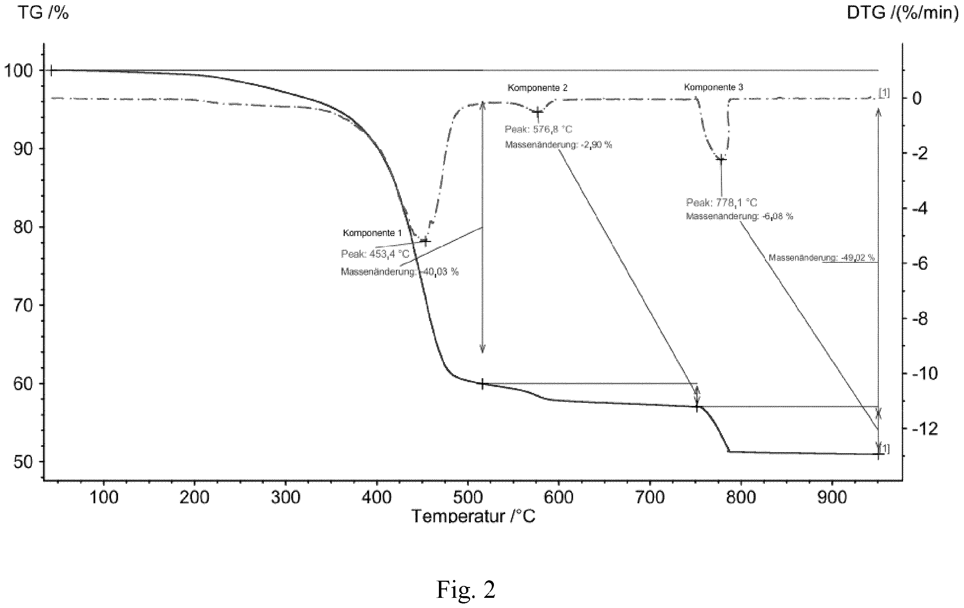

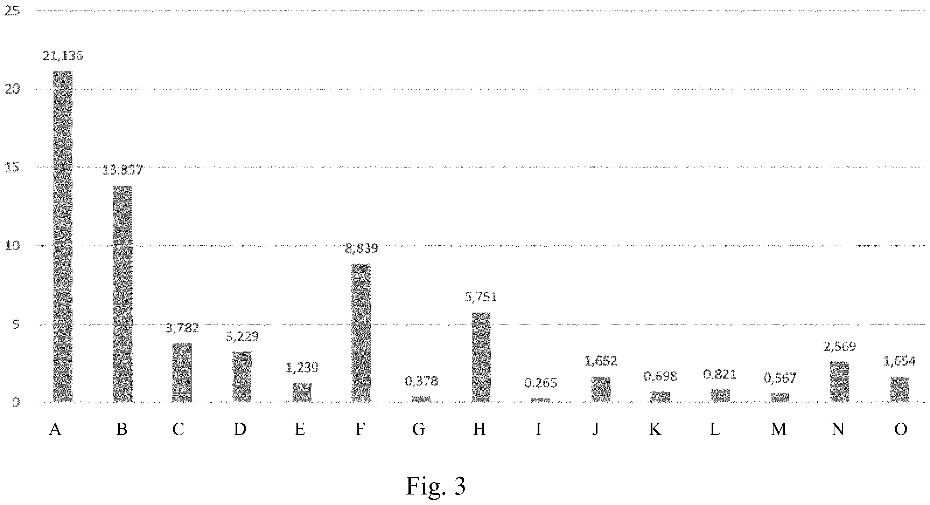

Fig. 2 zeigt beispielhaft ein Diagramm zu einer thermogravimetrischen Analyse des Produkts "Novapress 850 LOT 6-2016" der Frenzelit-Werke GmbH. Fig. 3 zeigt eine daraus abgeleitete Rohstoffkomponenten-Analyse für unterschiedliche Rohstoffkomponenten A-O. Sowohl das Vorhandensein eines Peaks (vorhanden/nicht vorhanden) als auch die tatsächliche Höhe des Peaks, also der Menge eines bestimmten Elements/Stoffes (z.B. abgestuft in 0-2%, 2,5-5%, 5,5-7% etc.) können zur Kodierung bzw. Erzeugung des kennzeichnenden Signals verwendet werden. Alternativ oder zusätzlich können auch die Verhältnisse, mathematischen Produkte oder Summen zweier oder mehrere Peaks zueinander zur Kodierung verwendet werden. Die Erstellung einer geeigneten Kodierungssprache wird einem Fachmann nicht schwerfallen und sollte nicht zur Einschränkung der vorliegenden Offenbarung genutzt werden.

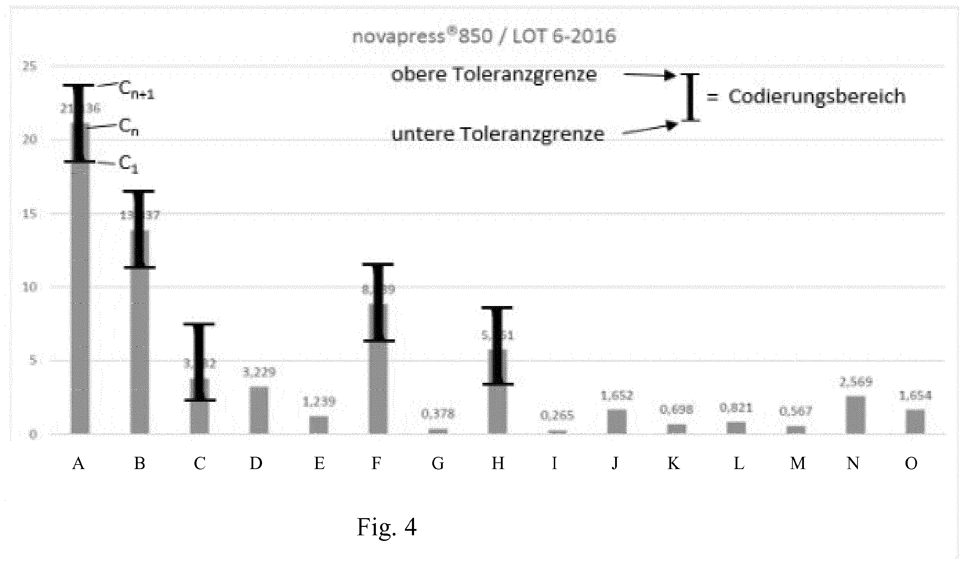

Fig. 4 zeigt die Rohstoffkomponenten -Analyse der unterschiedlichen Rohstoffkomponenten A-O aus Fig. 3 mit Angabe beispielhafter Rohstoffkomponenten, die variiert werden, um die Produktsignalrezeptur zu erzeugen. Die Mengentoleranzen oder auch "Codierungsbereiche" geben einen absoluten Spielraum zur Mengenvariation der Rohstoffkomponente ohne die Qualität des Produkts negativ zu beeinflussen. Für ausgewählte Komponenten liegt ein sogenannter Codierungsbereich mit einer unteren und oberen Toleranzgrenze vor. In Abhängigkeit des Anteils einer Komponente (beispielsweise für Komponente 1 die Anteile C₁, Cₙ und cₙ₊₁) können so unterschiedliche Elementsignale generiert werden.

Wie in der Ausführungsform der Fig. 4 angedeutet wird, werden nicht alle Rohstoffkomponenten zur Einstellung des Produktsignals bevorzugt. Sind gewisse Komponenten in zu geringen Mengen vorgesehen, ergibt sich kein ausreichend großer Codierungsbereich, um das Spektralsignal des fertigen Produkts ausreichend zu beeinflussen.

Geeignete Rohstoffkomponenten umfassen Elastomer bzw. Elastomer-Gemische (z.B. Nitril-Butadien-Kautschuk (NBR), Styrol-Butadien-Kautschuk (SBR), Ethylen-Propylen-DienKautschuk (EPDM) etc.), Quarz, Glimmer, Kieselerden, Kaoline, Kieselsäure, Bariumsulfat, Wollastonit, Schwerspat, Talkum, Bornitrid, Metalloxide, Graphit, Alkalisalze, Erdalkalisalze, organische Fasern (z.B. Aramid, Cellulose, etc.) und/oder anorganische Fasern (z.B. Mineralfaser, Glasfaser, etc.).

Geeignete Stoffe zur Erzeugung detektierbarer und ausreichend chemisch stabiler Peaks für das kennzeichnende Materialsignal umfassen bevorzugt Si, K, Al, Mg, Fe, Li, V, Cr, B, Zn, Mn, Na, Cs, Ca, Ba, Ti, Rb, N, C, Fr, Be, Sr und/oder Ra sowie ein binäres, ternäres oder quaternäres Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat oder Oxygermanat dieser Elemente.

Zusammengefasst ist der Grundgedanke der vorliegenden Offenbarung jedes Produktionslot durch Variation der Materialchargen ausgewählter Rezepturbestandteile mit einer unverwechselbaren Materialcharakteristik zu versehen, welche in einer Materialdatenbank hinterlegt wird. Eine unverwechselbare Materialcharakteristik innerhalb eines Produktionslots wird erreicht, indem Rohstoffkomponenten gezielt und bewusst kombiniert werden. Die hierin vorgestellte Technologie ermöglicht eine eindeutige Identifizierung des Dichtungswerkstoffes (z.B. Produktname, Fertigungslot und Herstellzeitraum, etc.) sogar an kleinsten Dichtungsresten (geometrieunabhängig).

Im Rahmen der vorliegenden Offenbarung wurde erstmalig erreicht, einem Dichtungswerkstoff die Eigenschaften der Rückverfolgbarkeit und Identifikationsfähigkeit inhärent beizufügen ohne dabei die Grundrezeptur und somit die Dichtungseigenschaften des Produkts zu ändern. Diese Eigenschaft ist erstmalig temperaturstabil, medienstabil, unverlierbar und geometrieunabhängig mit dem Dichtungswerkstoff verbunden und beeinträchtigt die dichtungstechnischen Kennwerte und Parameter nicht negativ. Damit ist erstmalig eine praktikable Lösung geschaffen, die die Rückverfolgbarkeit entlang der gesamten Wertschöpfungskette einer Dichtung zulässt. Die Technologie der vorliegenden Offenbarung kann als Plattformtechnologie dienen und somit für weitere Dichtungswerkstoffe zur Anwendung kommen.

Auch wird eine Förderung der Verknüpfung von Informationen in einer Industrieanlage gefördert ("Industrie 4.0"). Beispielsweise kann nach Versagen einer Dichtung herkömmlicherweise nicht oder nur mit hohem Aufwand (Dokumentation der Installation jeder Dichtung) ermittelt werden, wann diese Dichtung eingebaut wurde bzw. wann und wo diese produziert wurde. Die vorliegende Erfindung ermöglicht die Bereitstellung dieser Informationen ohne nachteilige und/oder kostenintensive Rezepturänderungen.

Ein zusätzlicher Aspekt der vorliegenden Offenbarung wird in der Verwendung von Rohstoffkomponenten gemäß dem Verfahren nach Anspruch 1 und der Verwendung einer daraus hergestellten Dichtung bereitgestellt.

## Patentansprüche

1. Verfahren zur eindeutigen und unverlierbaren Kennzeichnung und Identifizierung eines Weichdichtungsmaterials oder Weichdichtungshalbzeugs sowie einer draus hergestellten Dichtung, auf Basis einer Produktrezeptur und Daten einer Charakterisierung von Rohstoffkomponenten der Produktrezeptur, die aus Mengenangaben mehrerer dichtungsfunktioneller Rohstoffkomponenten besteht, ohne Zugabe von rezepturfremden Indikatoren oder Tracern, wobei die Produktrezeptur für jede der Rohstoffkomponenten eine gewisse Mengentoleranz aufweist, innerhalb derer das Produkt seine gewünschten Dichtungseigenschaften aufweist, umfassend:
(a) qualitative und quantitative Charakterisierung der Rohstoffkomponenten, insbesondere hinsichtlich deren elementarer Zusammensetzung, und Zuordnung der durch die Charakterisierung gewonnenen Daten;
(b) qualitative und quantitative Auswahl und Kombination der Rohstoffkomponenten gemäß der Produktrezeptur, wobei durch Variation der Mengenangaben mindestens einer Rohstoffkomponente der Produktrezeptur, eine Produktsignalrezeptur mit einem eindeutigen Spektralsignal bzw. Fingerprint des Produkts anhand der zugeordneten Daten der Charakterisierung der Rohstoffkomponenten ermittelt wird und Hinterlegen des eindeutigen Spektralsignals in einer Datenbank, wobei
die Eindeutigkeit des Spektralsignals durch Abgleich mit Spektralsignalen bereits existierender Produkte der Datenbank und durch Variation der Mengenangabe der mindestens einen Rohstoffkomponente der Produktrezeptur innerhalb der Mengentoleranzen der mindestens einen Rohstoffkomponente gewährleistet wird; und
(c) Herstellen des Produkts mit dem eindeutigen Spektralsignal aus den Rohstoffkomponenten gemäß der Produktsignalrezeptur, wobei
die Rohstoffkomponenten Komponenten umfassen, ausgewählt aus der Gruppe, bestehend aus Elastomeren, Quarz, Glimmer, Kieselerden, Kaoline, Kieselsäure, Bariumsulfat, Wollastonit, Baryt, Diatomene, Talkum, Bornitrid, Metalloxide, Graphit, Alkalisalze, Erdalkalisalze, organischen Fasern und anorganischen Fasern.

2. Verfahren gemäß Anspruch 1, wobei
die mindestens eine Rohstoffkomponente der Produktrezeptur drei unterschiedliche Rohstoffkomponenten, bevorzugt vier unterschiedliche Rohstoffkomponenten, besonders bevorzugt mindestens fünf unterschiedliche Rohstoffkomponenten umfasst und wobei
die mindestens eine Rohstoffkomponente in einer Menge von mindestens 3 Gewichtsprozent, bevorzugt mindestens 5 Gewichtsprozent, besonders bevorzugt mindestens 8 Gewichtsprozent, bezogen auf die Gesamtzusammensetzung der Produktrezeptur enthalten ist.

3. Verfahren gemäß Anspruch 1 oder 2, wobei die Rohstoffkomponenten der Produktrezeptur ausgewählt sind aus der Gruppe, bestehend aus Elastomeren, Quarz, Glimmer, Kieselerden, Kaoline, Kieselsäure, Bariumsulfat, Wollastonit, Baryt, Diatomene, Talkum, Bornitrid, Metalloxide, Graphit, Alkalisalze, Erdalkalisalze, organischen Fasern und anorganischen Fasern.

4. Verfahren gemäß einem der vorstehenden Ansprüche, wobei die Charakterisierung der Rohstoffkomponenten eine chemische Analyse der Rohstoffkomponenten oder Erhalten der Zusammensetzung der Rohstoffkomponenten von einer Datenbank bzw. einem Datenträger umfasst.

5. Verfahren gemäß einem der vorstehenden Ansprüche, weiterhin umfassend eindeutiges Verknüpfen des Spektralsignals des Produkts mit einem Kennzeichnungseintrag in einer Datenbank.

6. Verfahren gemäß einem der vorstehenden Ansprüche, wobei das Charakterisieren der Rohstoffkomponenten umfasst:
Analysieren der Rohstoffkomponenten hinsichtlich der enthaltenen Mengen von mindestens zwei unterschiedlichen chemischen Elementen, wobei die Stärke von Spektralpeaks jeweils bei einer Wellenlänge, die einem der mindestens zwei chemischen Elemente entspricht, als Codierungssignal zur eindeutigen Identifizierung des Produkts in einer Datenbank hinterlegt wird.

7. Verfahren gemäß Anspruch 6, wobei das Analysieren der Rohstoffkomponenten durch ein Analyseverfahren erfolgt und bevorzugt durch ein spektroskopisches Verfahren erfolgt, das ausgewählt ist aus einer Gruppe, bestehend aus thermogravimetrischer Analyse, Massenspektroskopie, Atom- oder Molekülabsorptionsspektroskopie, Atom- oder Molekülemissionsspektroskopie, Atom- oder Molekülfluoreszenzspektroskopie, Streuungsspektroskopie, Kernresonanzspektroskopie, Festkörperspektroskopie, Impedanzspektroskopie und Laserspektroskopie.

8. Verfahren gemäß einem der Ansprüche 5-7, wobei der Kennzeichnungseintrag in der Datenbank wenigstens Informationen in einer Kategorie umfasst, ausgewählt aus einer Gruppe, bestehend aus Herstellungsdatum, Zusammensetzung des Dichtungsmaterials, Produktnummer, Chargennummer, Hersteller, Herstellungsort, Herkunft wenigstens einer der Zutaten, Verwendungszweck, Einbauhinweise und einen Handbucheintrag zu dem Weichstoffdichtungsmaterial.

9. Verfahren gemäß einem der Ansprüche 5-8, wobei mehreren Peaks des Spektralsignals jeweils eine bestimmte Kennzeichnungseintragskategorie zugeordnet ist, so dass die Höhe eines dieser Peaks eine bestimmte Einheit in dieser Kennzeichnungseintragskategorie zugeordnet werden kann, um zum Beispiel, ohne die Notwendigkeit ständiger Aktualisierung der Datenbank, mittels sechs unterschiedlicher Signalpeaks jedem Produktionsslot ein Datum zuzuordnen.

10. Verfahren gemäß einem der Ansprüche 6 bis 9, wobei eine Peak-Position und die Peak-Höhe eines Peaks des Spektralsignals einer Strichposition und Strichdicke eines Barcodes oder einer Ziffer und Zifferposition in einer Zahlencodefolge zugeordnet werden und der Barcode bzw. die Zahlencodefolge beispielsweise auf einer Verpackung des Produkts abgebildet werden.

11. Verfahren gemäß einem der Ansprüche 6 bis 10, wobei die wenigstens zwei unterschiedlichen chemischen Elementen wenigstens ein Element umfassen, das ausgewählt ist aus einer Gruppe, bestehend aus Si, K, Al, Mg, Fe, Li, V, Cr, B, Zn, Mn, Na, Cs, Ca, Ba, Ti, Rb, C, Fr, Be, Sr und Ra.

12. Verfahren gemäß einem der vorstehenden Ansprüche, wobei die Charakterisierung der Rohstoffkomponenten eine Analyse zu Bestimmung der enthaltenen Mengen wenigstens eines Stoffes, ausgewählt aus einer Gruppe, bestehend aus binärem, ternärem oder quaternärem Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat und Oxygermanat.

13. Verfahren gemäß einem der vorstehenden Ansprüche, wobei dem Weichstoffdichtungsmaterial die Eigenschaften der Rückverfolgbarkeit und Identifikationsfähigkeit inhärent und unverlierbar beigefügt sind, wobei diese Eigenschaften temperaturstabil, medienstabil, unverlierbar und geometrieunabhängig mit dem Weichstoffdichtungsmaterial verbunden sind und die dichtungstechnischen Kennwerte und Parameter nicht negativ beeinträchtigen und wobei die Rückverfolgbarkeit entlang der gesamten Wertschöpfungskette des Weichstoffdichtungsmaterials bzw. der daraus hergestellten Dichtungen ermöglicht wird.

14. Verfahren gemäß einem der vorstehenden Ansprüche, weiterhin umfassend:
(d) Scannen des Produkts mit einem Detektionsgerät; und
(e) Herstellen einer Datenverbindung von dem Detektionsgerät oder einem daran angeschlossenen Anzeigegerät mit einer zentralen Rechnereinrichtung und Auslesen der aus dem spezifischen Materialsignal erhaltenen Daten.

15. Verfahren gemäß einem der vorstehenden Ansprüche, wobei die Mengentoleranzen einer Rohstoffkomponente, innerhalb derer das Produkt seine gewünschten Dichtungseigenschaften aufweist, sich je nach Rohstoffkomponente und deren elementarer Zusammensetzung im Bereich von ± 0,02 Gew.-% bis 10,0 Gew.-% und besonders bevorzugt im Bereich von ± 0,10 Gew.-% bis 1,0 Gew.-%, bezogen auf die jeweilige einzuwiegende Rohstoffkomponente in der Produktrezeptur liegen.

## Claims

1. Method for the unique and captive marking and identification of a soft seal material or soft seal semi-finished product, as well as a seal produced therefrom, based on a product formulation and data of a characterization of raw material components of the product formulation, which consists of quantity of a plurality of sealing-functional raw material components, without adding indicators or tracers foreign to the formulation, wherein the product formulation for each of the raw material components has a certain quantity tolerance within which the product has its desired sealing properties, comprising:
(a) qualitative and quantitative characterization of the raw material components, in particular with respect to their elementary composition, and allocation of the data obtained by the characterization;
(b) qualitative and quantitative selection and combination of the raw material components according to the product formulation, wherein by variation of the quantities of at least one raw material component of the product formulation, a product signal formulation with a unique spectral signal or fingerprint of the product is determined on the basis of the allocated data of the characterization of the raw material components and depositing the unique spectral signal in a database, wherein
the uniqueness of the spectral signal is ensured by comparison with spectral signals of already existing products of the database and by variation of the quantity of the at least one raw material component of the product formulation within the quantity tolerances of the at least one raw material component; and
(c) producing the product with the unique spectral signal from the raw material components according to the product signal formulation, wherein
the raw material components comprise components selected from the group consisting of elastomers, quartz, mica, silica, kaolin, silica acid, barium sulfate, wollastonite, barite, diatomene, talc, boron nitride, metal oxides, graphite, alkali salts, alkaline earth salts, organic fibers and inorganic fibers.

2. Method according to claim 1, wherein
the at least one raw material component of the product formulation comprises three different raw material components, preferably four different raw material components, particularly preferably at least five different raw material components, and wherein
the at least one raw material component is contained in an amount of at least 3% by weight, preferably at least 5% by weight, particularly preferably at least 8% by weight, based on the total composition of the product formulation.

3. Method according to claim 1 or 2, wherein the raw material components of the product formulation are selected from the group consisting of elastomers, quartz, mica, silica, kaolin, silica acid, barium sulfate, wollastonite, barite, diatomene, talc, boron nitride, metal oxides, graphite, alkali salts, alkaline earth salts, organic fibers and inorganic fibers.

4. Method according to any of the preceding claims, wherein the characterization of the raw material components comprises a chemical analysis of the raw material components or obtaining the composition of the raw material components from a database or a data carrier.

5. Method according to any of the preceding claims, further comprising uniquely associating the spectral signal of the product with an identification marking entry in a database.

6. Method according to any of the preceding claims, wherein the characterization of the raw material components comprises:
Analyzing the raw material components with respect to the contained amounts of at least two different chemical elements, wherein the strength of spectral peaks is respectively desposited at a wavelength corresponding to one of the at least two chemical elements as a coding signal for uniquely identifying the product in a database.

7. Method according to claim 6, wherein the analyzing of the raw material components occurs by an analytical method and preferably occurs by a spectroscopic method selected from a group consisting of thermogravimetric analysis, mass spectroscopy, atomic or molecular absorption spectroscopy, atomic or molecular emission spectroscopy, atomic or molecular fluorescence spectroscopy, scattering spectroscopy, nuclear resonance spectroscopy, solid state spectroscopy, impedance spectroscopy and laser spectroscopy.

8. Method according to any of claims 5-7, wherein the identification marking entry in the database comprises at least information in a category selected from a group consisting of date of manufacture, composition of the sealing material, product number, batch number, manufacturer, place of manufacture, origin of at least one of the ingredients, designated use, installation instructions and a manual entry for the soft seal material.

9. Method according to any of claims 5-8, wherein a plurality of peaks of the spectral signal are each associated with a particular identification marking entry category, so that the height of one of said peaks can be associated with a particular unit in said identification marking entry category, for example, to assign a date to each production slot by means of six different signal peaks without the need for continuous updating of the database.

10. Method according to any of claims 6 to 9, wherein a peak position and the peak height of a peak of the spectral signal are associated with a bar position and bar thickness of a bar code or a digit and digit position in a numerical code sequence, and the bar code or numerical code sequence is mapped, for example, on a package of the product.

11. Method according to any of claims 6 to 10, wherein the at least two different chemical elements comprise at least one element selected from a group consisting of Si, K, Al, Mg, Fe, Li, V, Cr, B, Zn, Mn, Na, Cs, Ca, Ba, Ti, Rb, C, Fr, Be, Sr and Ra.

12. Method according to any of the preceding claims, wherein the characterization of the raw material components comprises an analysis to determine the amounts contained of at least one substance selected from a group consisting of binary, ternary or quaternary halide, oxide, oxyhalide, sulfide, oxysulfide, sulfate, oxysulfate, selenide, nitride, oxynitride, nitrate, oxynitrate, phosphide, phosphate, carbonate, silicate, oxysilicate, vanadate, molybdate, tungstate, germanate and oxygermanate.

13. Method according to one of the preceding claims, wherein the properties of traceability and identification capability are inherently and captively attached to the soft seal material, wherein these properties are connected to the soft seal material in a temperature-stable, media-stable, captive and geometry-independent manner and do not negatively affect the sealing-technical characteristics and parameters, and wherein the traceability along the entire value-added chain of the soft seal material or the seals produced therefrom is made possible.

14. Method according to any of the preceding claims, further comprising:
(d) scanning the product with a detection device; and
(e) establishing a data connection from the detection device or a display device connected thereto to a central computer device and reading the data obtained from the specific material signal.

15. Method according to one of the preceding claims, wherein the quantity tolerances of a raw material component, within which the product has its desired sealing properties, are in the range from ± 0.02 wt.-% to 10.0 wt.-% and particularly preferably in the range from ± 0.10 wt.-% to 1.0 wt.-%, based on the respective raw material component to be weighed, depending on the raw material component and its elemental composition, in the product formulation.

## Revendications

1. Procédé, destiné à la caractérisation et à l'identification univoques et imperdables d'une matière pour joint souple ou d'un joint souple semi-fini, ainsi que d'un joint fabriqué à partir de ces derniers, sur la base d'une formulation de produit et de données d'une caractérisation de composants de matière première de la formulation de produit, qui est constituée d'indications quantitatives de plusieurs composants de matière première fonctionnels en matière d'étanchéité, sans rajout d'indicateurs ni traceurs étrangers à la formulation, la formulation de produit comportant pour chacun des composants de matière première une certaine tolérance quantitative dans le cadre de laquelle le produit fait preuve de ses propriétés souhaitées en matière d'étanchéité, comprenant :
(a) une caractérisation qualitative et quantitative des composants de matière première, notamment en ce qui concerne leur composition élémentaire, et une affectation des données acquises par la caractérisation ;
(b) une sélection qualitative et quantitative et une association des composants de matière première selon la formulation de produit, par variation der indications quantitatives d'au moins un composant de matière première de la formulation de produit, une formulation de signal produit avec un signal spectral ou une empreinte du produit indubitable étant déterminée à l'aide des données affectées de la caractérisation des composants de matière première et une sauvegarde du signal spectral indubitable dans une banque de données,
le caractère indubitable du signal spectral étant assuré par contrôle croisé avec des signaux spectraux de produits déjà existants de la banque de données et par variation de l'indication quantitative de l'au moins un composant de matière première de la formulation de produit dans le cadre des tolérances quantitatives de l'au moins un composant de matière première ; et
(c) une fabrication du produit avec le signal spectral indubitable à partir des composants de matière première selon la formulation de signal produit,
les composants de matière première comprenant des composants sélectionnés dans le groupe constitué d'élastomères, du quartz, du mica, des silices, des kaolins, de l'acide silicique, du sulfate de baryum, de la wollastonite, de la barytine, des diatomées, du talc, du nitrure de bore, des oxydes métalliques, du graphite, des sels alcalins, des sels alcalinoterreux, des fibres organiques et des fibres inorganiques.

2. Procédé selon la revendication 1,
l'au moins un composant de matière première de la formulation de produit comprenant trois différents composants de matière première, de préférence quatre différents composants de matière première, de manière particulièrement préférentielle, au moins cinq différents composants de matière première et
l'au moins un composant de matière première étant contenu dans une quantité d'au moins 3 pour cent en poids, de préférence d'au moins 5 pour cent en poids, de manière particulièrement préférentielle, d'au moins 8 pour cent en poids, en rapport à la composition totale de la formulation de produit.

3. Procédé selon la revendication 1 ou 2, les composants de matière première der de la formulation du produit étant sélectionnés dans le groupe constitué d'élastomères, du quartz, du mica, des silices, des kaolins, de l'acide silicique, du sulfate de baryum, de la wollastonite, de la barytine, des diatomées, du talc, du nitrure de bore, des oxydes métalliques, du graphite, des sels alcalins, des sels alcalinoterreux, des fibres organiques et des fibres inorganiques.

4. Procédé selon l'une quelconque des revendications précédentes, la caractérisation des composants de matière première comprenant une analyse chimique des composants de matière première ou une obtention de la composition des composants de matière première de la part d'une banque de données ou d'un support de données.

5. Procédé selon l'une quelconque des revendications précédentes, comprenant par ailleurs une interconnexion indubitable du signal spectral du produit avec une entrée d'identification dans une banque de données.

6. Procédé selon l'une quelconque des revendications précédentes, la caractérisation des composants de matière première comprenant :
une analyse des composants de matière première au niveau des quantités contenues d'au moins deux différents éléments chimiques, l'intensité du pic spectral étant sauvegardée dans une banque de données en tant que signal de codage pour l'identification indubitable du produit, respectivement à une longueur d'ondes qui correspond à l'un des au moins deux éléments chimiques.

7. Procédé selon la revendication 6, l'analyse des composants de matière première s'effectuant à l'aide d'un procédé d'analyse et de préférence d'un procédé spectroscopique qui est sélectionné dans le groupe constitué de l'analyse thermogravimétrique, de la spectroscopie de masse, de la spectroscopie par absorption atomique ou de la spectroscopie par absorption moléculaire, de la spectroscopie de fluorescence atomique ou de la spectroscopie de fluorescence moléculaire, de la spectroscopie de dispersion, de la spectroscopie de résonance magnétique nucléaire, de la spectroscopie du corps solide, de la spectroscopie par impédance et de la spectroscopie au laser.

8. Procédé selon l'une quelconque des revendications 5 à 7, l'entrée d'identification dans la banque de données comprenant au moins des informations dans une catégorie, sélectionnée dans le groupe constitué de la date de fabrication, de la composition de la matière d'étanchéité, du numéro du produit, du numéro de la charge, du fabricant, du lieu de fabrication, de la provenance d'au moins l'un des ingrédients, de l'utilisation prévue, des instructions de montage et une entrée du manuel concernant la matière pour joint souple.

9. Procédé selon l'une quelconque des revendications 5 à 8, à plusieurs pics du signal spectral étant respectivement affectée une certaine catégorie d'entrée d'identification, de sorte qu'à la hauteur de l'un desdits pics puisse être affectée une certaine unité dans ladite catégorie d'entrée d'identification, pour affecter par exemple, sans la nécessité d'une mise à jour permanente de la banque de données, au moyen de six différents pics de signaux une date à chaque lot de production.

10. Procédé selon l'une quelconque des revendications 6 à 9, une position de pic et la hauteur de pic du signal spectral étant affectées à une position de trait ou à une épaisseur de trait d'un code-barres ou à un chiffre et à une position de chiffre dans une séquence de codes chiffrés et le code-barres ou la séquence de codes chiffrés étant reproduits par exemple sur un emballage du produit.

11. Procédé selon l'une quelconque des revendications 6 à 10, les au moins deux différents éléments chimiques comprenant au moins un élément qui est sélectionné dans un groupe, constitué du Si, du K, de l'Al, du Mg, du Fe, du Li, du V, du Cr, du B, du Zn, du Mn, du Na, du Cs, du Ca, du Ba, du Ti, du Rb, du C, du Fr, du Be, du Sr et du Ra.

12. Procédé selon l'une quelconque des revendications précédentes, la caractérisation des composants de matière première comprenant une analyse destinée à déterminer les quantités contenues d'au moins une substance, choisie dans le groupe constitué de l'halogénure binaire, ternaire ou quaternaire, de l'oxyde, de l'oxyhalogénure, du sulfure, de l'oxysulfure, du sulfate, de l'oxysulfate, du séléniure, du nitrure, de l'oxynitrure, du nitrate, de l'oxynitrate, du phosphure, du phosphate, du carbonate, du silicate, de l'oxysilicate, du vanadate, du molybdate, du tungstate, du germanate et de l'oxygermanate.

13. Procédé selon l'une quelconque des revendications précédentes, à la matière pour joint souple étant ajoutées de manière inhérente et imperdable les propriétés de la traçabilité et de la capacité d'identification, lesdites propriétés étant reliées de manière thermostable, stable aux milieux, imperdable et indépendante de la géométrique avec la matière pour joint souple et ne portant pas atteinte aux valeurs caractéristiques et paramètres relevant de la technique d'étanchéité et la traçabilité le long de l'ensemble de la chaîne de valeur ajoutée de la matière pour joint souple ou des joints fabriqués à partir de celle-ci étant rendue possible.

14. Procédé selon l'une quelconque des revendications précédentes, comprenant par ailleurs :
(d) un balayage du produit à l'aide d'un instrument de détection ; et
(e) un établissement d'une connexion de données de l'instrument de détection ou d'un instrument d'affichage qui y est raccordé avec un système informatique centralisé et une lecture des données obtenues à partir du signal spécifique de la matière.

15. Procédé selon l'une quelconque des revendications précédentes, les tolérances quantitatives d'un composant de matière première, dans le cadre desquelles le produit fait preuve de ses propriétés d'étanchéité souhaitées se situant en fonction du composant de matière première et de sa composition élémentaire dans l'ordre de ± 0,02 % en poids à 10,0 % en poids et de manière particulièrement préférentielle, dans l'ordre de ± 0,10 % en poids à 1,0 % en poids, rapporté au composant de matière première qui doit être respectivement pesé dans la formulation de produit.
